# EUROPÄISCHE PATENTSCHRIFT

(11) **EP 4 140 705 B1**
(45) Veröffentlichungstag und Bekanntmachung des Hinweises auf die Patenterteilung: **18.09.2024**
(21) Anmeldenummer: 21193503.6
(22) Anmeldetag: 27.08.2021
(51) Int. Cl.: B29C 65/18, B29C 65/50, B29C 65/78, B29C 65/00, B29L 23/20

(54) **VERFAHREN ZUM HERSTELLEN VON FLEXIBLEN TUBENKÖRPERN FÜR VERPACKUNGSTUBEN UND VORRICHTUNG ZUR HERSTELLUNG VON FLEXIBLEN TUBENKÖRPERN FÜR VERACKUNGSTUBEN**
METHOD OF MAKING FLEXIBLE TUBE BODIES FOR PACKAGING TUBES AND DEVICE FOR MANUFACTURING FLEXIBLE TUBE BODIES FOR PACKAGING TUBES
PROCÉDÉ DE FABRICATION DE CORPS TUBULAIRES SOUPLES POUR TUBES D'EMBALLAGE ET DISPOSITIF DE FABRICATION DE CORPS TUBULAIRES SOUPLES POUR TUBES D'EMBALLAGE

(43) Veröffentlichungstag der Anmeldung: 01.03.2023
(73) Patentinhaber: PackSys Global AG, 8630 Rüti ZH (CH)
(72) Erfinder: LÄUBLI, Julius, 8645 Jona (CH); AKERMANN, Kurt, 8610 Uster (CH); ALMER, Philippe, 8155 Niederhasli (CH); ESSER, Ulrich, 8630 Rüti (CH); FISCHER, Matthias, 8627 Grüningen (CH)
(74) Vertreter: Patent- und Rechtsanwälte Behrmann Wagner PartG mbB

(56) Entgegenhaltungen:
- EP-A1- 0 596 532
- WO-A1-2020/098906
- US-A- 3 402 089

## Beschreibung

Die vorliegende Erfindung betrifft ein Verfahren zum Herstellen von flexiblen Tubenkörpern für Verpackungstuben nach dem Oberbegriff des Patentanspruchs 1 sowie flexible Tubenkörper für Verpackungstuben, die mit dem Verfahren des Anspruchs 1 hergestellt werden. Ferner betrifft die vorliegende Erfindung eine Vorrichtung zum Herstellen von flexiblen Tubenkörpern für Verpackungstuben gemäß dem Oberbegriff des Patentanspruchs 10.

Gattungsgemäße Tubenkörper für Verpackungstuben, die Verfahren zu deren Herstellung und die Vorrichtungen zu deren Herstellung sind aus dem Stand der Technik in unterschiedlicher Ausprägung bekannt. Allgemein ist vorgesehen, dass ein, bevorzugt auf einer Außenseite eine Bedruckung aufweisendes Foliensubstrat mit dessen Längsrandseiten zu einem Rohrkörper umgeformt und im Bereich der Längsrandseiten unter Ausbildung einer Längsschweißnaht verbunden, insbesondere befestigt, wird.

Dabei ist es bereits seit langem bekannt, dass die Längsschweißnaht zur Herstellung des Tubenkörpers als überlappende Schweißnaht der Längsrandseiten gebildet wird. Dies bedeutet, dass die Längsrandseiten des Foliensubstrats im Rahmen der Umformung zu einem Rohrkörper einen Überlapp aufweisen oder ausbilden, in dessen Bereich dann die Schweißnaht oder Längsschweißnaht ausgebildet wird oder angebracht wird. Vor dem Verschweißen kommt dabei im Überlappungsbereich die überlappende, d.h. die sich im Tubenäußeren befindliche Laminatkante oder Längsrandseite des Laminats auf der überlappten, also der im Tubeninneren, angeordneten Laminatkante oder Längsrandseite zu liegen. Ein Beispiel eines entsprechenden Verfahrens ist aus der EP 0 187 541 A2 bekannt. Als alternative Lösung zu einer überlappenden Anordnung der Längsrandseiten des Foliensubstrats bei der Überführung in einen Rohrkörper zur Ausbildung eines flexiblen Tubenkörpers für Verpackungstuben ist ebenfalls seit längerem bekannt, die Längsschweißnaht als Stoßnaht auszubilden, bei der also die Längsrandseiten des Foliensubstrats auf Stoß zueinander angeordnet oder aneinander anliegend ausgerichtet werden und in der besagten Anordnung oder Ausrichtung der Längsrandseiten die Längsschweißnaht ausgebildet wird.

Dabei weisen die als Stoßnähte ausgebildeten Längsschweißnähte oftmals eine verminderte Stabilität auf. Um die verminderte Stabilität zu verbessern ist es aus dem Stand der Technik bereits bekannt auf der Außenseite oder auf der Innenseite eine Verstärkung vorzusehen, die in der Regel durch einen Streifen gebildet wird, der zusammen mit dem zum Rohrkörper umgeformten Foliensubstrat im Bereich der Längsrandseiten, insbesondere im Bereich der Längsschweißnaht radial außen oder radial innen mit dem Foliensubstrat verbunden wird. Eine besonders vorteilhafte Lösung einer Stoßnaht der Längsrandseiten unter Verwendung eines derartigen Streifens ist aus der WO 2020/098906 A1 bekannt, die auf die Anmelderin zurückgeht.

Es hat sich jedoch herausgestellt, dass bei der Verwendung solcher bekannter Streifen das Problem besteht, dass in den Bereichen oder Abschnitten in Umfangsrichtung, in denen der Streifen endet oder die seitlichen Ränder des Streifens angeordnet sind das Foliensubstrat zur Knickbildung im Rahmen der Ausbildung der Längsschweißnaht neigt. Die Knickbildung kann zwar vorteilhaft dadurch vermieden werden, dass der Streifen in einem erwärmten und bevorzugt plastifizierten Zustand zugeführt wird, sodass dieser auch an seinen seitlichen Rändern einen geringeren Widerstand für das Foliensubstrat darstellt. Eine derartige Erwärmung des Streifens ist aus der WO 2020/098906 A1 bereits bekannt.

Aus der US 3 402 089 A ist eine Vorrichtung zum Verschweißen von bahnenförmigem Material über eine thermoplastische Verbindung mit regelbarer Vorschubgeschwindigkeit der zu verschweißenden Teile oder Ränder bekannt, um den Schmelzpool der erhitzten Ränder zu kontrollieren.

Aus der US 6 053 230 A ist ein Heißluftschweißgerät bekannt, bei dem die zu verschweißenden Streifen ebenfalls mit unterschiedlicher Geschwindigkeit zugeführt werden, um durch Scherkräfte auf eine Öffnung im Bauteil einzuwirken.

Die EP 0 596 532 A1 offenbart ein strukturiertes Laminatmaterial, bei dessen Herstellung ebenso unterschiedliche Fügepartner mit unterschiedlichen Zuführgeschwindigkeiten bereitgestellt werden.

Bei einer Erwärmung des Streifens insbesondere bis zu dessen Plastifizierung oder bis oberhalb der Plastifizierungstemperatur des Streifens, entsteht jedoch die Problematik, dass der erwärmte Streifen schwierig handhabbar ist und zum Schlingern, also zum Ausbrechen gegenüber der Verschweißrichtung oder Vorschubrichtung neigt und ferner aufgrund von thermischer Ausbreitung, insbesondere thermischer Verlängerung in Vorschub- oder Verschweißrichtung zur Wulstbildung neigt, was sowohl die optischen Eigenschaften des flexiblen Tubenkörpers als auch die Funktionalität, insbesondere die Dichtheit der Längsschweißnaht negativ beeinflussen kann.

Dementsprechend ist es die Aufgabe der vorliegenden Erfindung ein Verfahren und eine Vorrichtung zur Herstellung von flexiblen Tubenkörpern für Verpackungstuben sowie Tubenkörper für Verpackungstuben und Verpackungstuben vorzuschlagen, bei denen die Nachteile im Stand der Technik überwunden werden, insbesondere zur Vermeidung seitlicher Knickbildung ein erwärmter Streifen, unabhängig von der Art der Ausbildung der Längsschweißnaht, verwendet werden kann, und dabei der Streifen gut handhabbar bleibt, sodass es nicht zum Schlingern des Streifens oder zur Wulstbildung kommt.

Gelöst wird diese Aufgabe mit einem Verfahren zur Herstellung von flexiblen Tubenkörpern für die Herstellung von Verpackungstuben mit den Merkmalen des Anspruchs 1. Außerdem wird die Aufgabe mit einer Vorrichtung zur Herstellung der Tubenkörper mit den Merkmalen des Anspruchs 9 gelöst. Auch Gegenstand der Erfindung ist ein Tubenkörper der mit dem Verfahren und oder der Vorrichtung hergestellt ist. Schließlich ist Gegenstand der vorliegenden Erfindung eine Verpackungstube, die aus einem vorangehend genannten Tubenkörper hervorgeht.

Das Verfahren zum Herstellen von flexiblen Tubenkörpern für Verpackungstuben oder für die Herstellung von Verpackungstuben aus einem, bevorzugt auf einer Außenseite eine Bedruckung aufweisenden, Foliensubstrat, welches mindestens eine verschweißbare Kunststoffschicht aufweist oder aus dieser besteht und welches eine sich in eine Längsrichtung erstreckende erste Längsrandseite und eine hierzu parallele und beabstandete zweite Längsrandseite umfasst sieht in an sich bekannter Art und Weise den Verfahrensschritt vor, wonach das Foliensubstrat mit Umformmitteln zu einem Rohrkörper geformt und die beiden Längsrandseiten in einem nachfolgenden Verfahrensschritt unter Ausbildung einer Längsschweißnaht verbunden, insbesondere miteinander verschweißt, werden. Weiterhin sieht das Verfahren in gattungsgemäßer Weise vor, dass im Bereich der Längsschweißnaht im Inneren und/oder Äußeren des zum Rohrkörper umgeformten Foliensubstrat, insbesondere vor dem Verbinden oder Verschweißen der Längsrandseiten ein Streifen angeordnet und zumindest bereichsweise oder abschnittsweise mit den Längsrandseiten verbunden, insbesondere verschweißt, wird. Dabei ist ebenfalls in grundsätzlich bekannter Art und Weise vorgesehen, dass der Streifen mittels Heizmitteln vor der Verbindung mit den Längsrandseiten erwärmt, bevorzugt auf eine Temperatur oberhalb der Plastifizierungstemperatur des Streifens, erwärmt wird.

Erfindungsgemäß sieht das Verfahren vor, dass der Streifen von einer Bereitstellungseinheit so zugeführt wird, dass die Zuführgeschwindigkeit des Streifens geringer ist als eine Vorschub- oder Verschweißgeschwindigkeit der Längsrandseiten des Foliensubstrats in Längsrichtung.

Die Erfindung beruht auf dem Grundgedanken, dass bei einer relativ langsameren Zuführung des erwärmten Streifens gegenüber der Vorschub- oder Verschweißgeschwindigkeit des Foliensubstrats oder der Längsrandseiten des Foliensubstrats die verminderte Zuführgeschwindigkeit des Streifens eine thermische Ausdehnung des erwärmten Streifens in Längsrichtung kompensieren kann und kompensiert, sodass die Längsausdehnung des Streifens nicht zu der Ausbildung von Schlingern oder Wülsten vor dem Verbinden mit den Längsrandseiten und/oder der Längsschweißnaht führt. Die Zuführgeschwindigkeit des Streifens ist dabei nicht gleich der Verarbeitungs- oder Verbindungs-/Verschweißgeschwindigkeit des Streifens. Vielmehr wird der Streifen, der mit einer verminderten Geschwindigkeit zugeführt wird, bis zur Verbindung, insbesondere Verschweißung, mit dem Foliensubstrat oder den Längsrandseiten des Foliensubstrats ebenfalls nochmals auf die Vorschub- oder Verschweißgeschwindigkeit beschleunigt. Es hat sich jedoch herausgestellt, dass es besonders vorteilhaft ist, wenn diese Beschleunigung erst in oder ab dem Bereich oder in oder ab dem Verfahrensabschnitt erfolgt, in dem auch die Erwärmung des Streifens eintritt oder bewirkt wird. In diesem Fall kann besonders vorteilhaft gerade die Längenausdehnung des Streifens durch die Erwärmung von der Beschleunigung oder Erhöhung der Geschwindigkeit des Streifens kompensiert werden.

Die Geschwindigkeit der Zufuhr des Streifens ist also von der Bereitstellung bis zur Verschweißung gerade nicht konstant. Die Zufuhr oder Bereitstellung erfolgt mit verminderter Geschwindigkeit und bis zur Ausbildung der Verbindung mit den Längsrandseiten wird eine nachträgliche Beschleunigung durchgeführt, die durch eine Längenänderung kompensiert wird, so dass diese nachträgliche Beschleunigung während des Verfahrens permanent aufrecht erhalten werden kann, ohne dass sich dadurch die reduzierte Zuführgeschwindigkeit des Streifens ändert oder ändern muss.

Gemäß einer ersten, vorteilhaften Ausführungsform des Verfahrens kann vorgesehen sein, dass die Zufuhr des Streifens und insbesondere die Erwärmung des Streifens, erfolgt/erfolgen, bevor die Längsrandseiten unter Ausbildung einer Längsschweißnaht verbunden, insbesondere miteinander verschweißt, werden. Dies hat den Vorteil, dass die Längsrandseiten, sowohl bei einer Stoßnaht als auch bei einer Überlappungsnaht, in den erwärmten und plastifizierten oder erweichten Streifen eingedrückt werden können und/oder in den Streifen einsinken können, wobei dadurch bereits eine erste Stabilisierung oder Fixierung des Streifens in Bezug auf die Längsrandseiten erreicht wird. Weiterhin kann dadurch auch bereits eine gewisse Vortemperierung der Längsrandseiten durch einen Wärmetransfer vom Streifen auf die Längsrandseiten erfolgen, der die Ausbildung der Längsschweißnaht positiv beeinflusst.

Gemäß einer weiteren, besonders vorteilhaften Ausführungsform des Verfahrens kann vorgesehen sein, dass die Zuführgeschwindigkeit zwischen 65% und 95%, bevorzugt zwischen 70% und 90%, besonders bevorzugt zwischen 75% und 85% der Vorschub- oder Verschweißgeschwindigkeit der Längsrandseiten des Foliensubstrats in Längsrichtung beträgt. Mit einer derart verminderten oder relativ geringeren Zuführgeschwindigkeit des Streifens kann einerseits eine Längenausdehnung aufgrund der thermischen Plastifizierung des Streifens oder thermischen Ausdehnung des Streifens kompensiert werden, der Streifen wird aber beim Beschleunigen auf die Vorschub- oder Verschweißgeschwindigkeit nicht derart gestreckt oder verjüngt, dass sich ungewünschte Sehnen oder Krümmungen sowie andere Verformungen des Streifens ausbilden oder der Streifen schlicht zu dünn wird.

In einer Weiterbildung des Verfahrens kann zudem vorgesehen sein, dass die Zufuhr des Streifens in einem kalten Zustand des Streifens, bevorzugt mit einer Temperatur unterhalb der Plastifizierungstemperatur des Streifens, erfolgt. Wie bereits eingangs erwähnt, leidet die Handhabbarkeit und die Möglichkeit zur Kräfte- und Impulsübertragung auf den Streifen, wenn dieser in einen erwärmten und/oder plastifizierten Zustand bevorzugt auf eine Temperatur oberhalb des Plastifizierungstemperatur, gebracht wird. Dementsprechend ist es zur genauen Kontrolle und zur genauen Einstellung der Zuführgeschwindigkeit besonders vorteilhaft, wenn der Streifen zunächst in einem kalten und damit gut kontrollierbaren Zustand, der somit auch eine gute Kontrolle über die Zuführgeschwindigkeit ermöglicht, zugeführt wird und erst nach der Zufuhr, beispielsweise verhältnismäßig kurz vor der Kontaktierung oder Verbindung mit den Längsrandseiten des Foliensubstrats erwärmt und erweicht wird.

Eine weitere besonders wünschenswerte Ausgestaltung des Verfahrens sieht vor, dass die Zufuhr des Streifens auf Zuführmittel für die Längsrandseiten des Foliensubstrats, bevorzugt auf ein endlos umlaufendes Band, erfolgt, wobei der Streifen mit den Zuführmitteln mittransportiert und während des Transports erwärmt wird. Damit können die Zuführmittel, die bei gattungsgemäßen Vorrichtungen bereits vorhanden sind, um die Längsrandseiten heranzuführen 'mitgenutzt werden, um auch den Streifen heranzuführen oder zu transportieren.

In einer weiteren, besonders vorteilhaften Ausgestaltung des Verfahrens kann vorgesehen sein, dass der Streifen nach seiner Abgabe oder Zuführung durch die Bereitstellungseinheit mit wenigstens einem Führungsmittel auf den oder entlang der Zuführmittel geführt wird, bevor die Kontaktierung mit dem Foliensubstrat erfolgt. Die Führungsmittel können bevorzugt als Rollen oder Räder vorgesehen sein. Die Führungsmittel können zum Beispiel als Walzrolle mit einer glatten oder unprofilierten Umfangsfläche ausgebildet sein. Die Führungsmittel können aber auch als profilierte Rollen, beispielsweise als Führungsrollen, mit einem in axialer Richtung beidseitig in radialer Richtung überstehenden Kragen oder Rand ausgebildet sein. Es können in Längsrichtung L auch verschiedene Rollen als Führungsmittel hintereinander angeordnet werden. Bevorzugt ist wenigstens ein Führungsmittel so in Längsrichtung angeordnet, dass der Streifen mit dem Führungsmittel in Kontakt kommt, während er eine Erwärmung erfährt oder während er ein Heizmittel zu Erwärmung bis oberhalb der Plastifizierungstemperatur passiert. In diesem Fall kann mit den Führungsmitteln neben einer seitlichen Führung bezogen auf die Längsrichtung auch eine verbesserte oder gleichmäßigere Erwärmung erreicht werden, dadurch, dass der Streifen die Heizmittel in einem gut definierten Zustand, der auch durch die Führungsmittel festgelegt wird, passiert. Insgesamt wird durch die Führungsmittel eine Führung des Streifens vor der Verbindung oder Kontaktierung mit den Längsrandseiten des Foliensubstrats ermöglicht.

Derartige Zuführmittel, insbesondere umlaufende Bänder, sind in gattungsgemäßen Vorrichtungen und Verfahren überaus verbreitet und dementsprechend bekannt. Sie dienen in der Regel zur Übertragung von Wärme auf die Längsrandseiten zur Ausbildung der Längsschweißnaht. Dazu werden die Zuführmittel, insbesondere Bänder, mit entsprechenden Heizmitteln beheizt und so angeordnet, dass in Längsrichtung oder in Vorschub- oder Verschweißgeschwindigkeit der Abstand zwischen den Zuführmitteln, bevorzugt Bänder bis auf einen minimalen Abstand verringert wird, sodass in einem gewissen Bereich oder ab einer gewissen Beabstandung in radialer Richtung sowohl Druck auf die Längsrandseiten des Foliensubstrats als auch Wärme übertragen wird, was dann zur Ausbildung der Längsschweißnaht führt. Da das Foliensubstrat in dieser Situation zu einem Rohrkörper umgeformt sind, ergibt sich daraus auch die Erzeugung eines Endlosrohres, aus dem dann einzelne Rohrkörper, beispielsweise durch schneiden oder sägen vereinzelt werden können.

Um keine Kratzer, Verschmierungen oder sonstige Materialbewegungen zu verursachen, werden die Zuführmittel in aller Regel mit der Vorschub- oder Verschweißgeschwindigkeit angetrieben oder betrieben. Folglich hat die vorangehend genannte Ausführungsform den Vorteil, dass bei einer Zuführung des Streifens auf die Zuführmittel der auf die Zuführmittel aufgetragene oder aufgegebene Streifen von diesen im Rahmen der Mitnahme oder des Mittransports automatisch auf die Vorschub- oder Verschweißgeschwindigkeit beschleunigt wird. Um keine Spannung in dem Streifen aufzubauen kann dabei vorgesehen sein, dass gerade in dem Bereich der Zuführmittel, die der Aufgabe oder Zuführung des Streifens in Längsrichtung oder in Vorschub- oder Verschweißgeschwindigkeit nachgeordnet ist, Heizmittel zur Erwärmung und/oder Erweichung des Streifens so angeordnet sind, dass der Streifen in einen plastisch verformbaren Zustand übergeht, bevor die Längsrandseiten mit dem Streifen in Kontakt kommen oder in Kontakt kommen können.

In einer weiteren, besonders vorteilhaften Ausgestaltung des Verfahrens kann vorgesehen sein, dass der Streifen vor der Zufuhr, bevorzugt beim Durchlaufen der Bereitstellungseinheit, eine Spannungsreduktion, insbesondere eine Zugspannungsreduktion erfährt. Um den Streifen kontrolliert zuzuführen ist es einerseits nötig den Nachschub oder die Zuführgeschwindigkeit des Streifens genau zu steuern oder präzise steuern zu können. Dazu sind in der Regel gewisse Kräfte notwendig, beispielsweise Zugkräfte, um den Streifen beispielsweise von einer Bevorratungsvorrichtung abzuwickeln, abzurollen oder in sonstiger Weise zu entnehmen. Gleichzeitig ist es jedoch für das erfindungsgemäße Verfahren wünschenswert und vorteilhaft, wenn ab einem gewissen Zeitpunkt, bevorzugt vor der Kontaktierung zwischen dem Streifen und dem Laminatsubstrat, besonders bevorzugt sogar bereits vor oder beim dem Auftragen oder Aufgeben des Streifens auf die Zuführmittel, der Streifen vor und insbesondere während und nach der Erwärmung kräftefrei oder zumindest weitestgehend kräftefrei gehalten wird. Denn die weitestgehend oder vollständige Kräftefreiheit also insbesondere die weitestgehend oder vollständige Abwesenheit von Zugkräften oder Schubkräften auf den Streifen, kann dafür sorgen, dass der Streifen nur durch den Einfluss und insbesondere die Bewegung des Foliensubstrats fortbewegt oder mitgenommen wird, wobei sich dann besonders bevorzugt während der Erwärmung in einem möglichst kräftefreien Zustand eine gleichmäßige und artefaktfreie Streckung des Streifens ergibt, sodass ebenfalls ohne Kräfte, außer der Kräfte, die von dem Foliensubstrat auf den Streifen wirken, der Streifen in den Prozess der Verschweißung und/oder in den Prozess der Ausbildung der Schweißnaht eingebracht wird.

Gemäß einer vorteilhaften Ausführungsform des Verfahrens kann vorgesehen sein, dass der Streifen vor der Zufuhr eine Richtungsänderung von wenigstens 90°, bevorzugt durch eine Umschlingung um ein Rad oder eine Rolle, durchläuft. Mit einer Richtungsänderung von 90° oder mehr, bevorzugt zwischen 90° und 270°, kann in vorteilhafter Weise eine Spannungsreduktion, bevorzugt eine Zugspannungsreduktion im Streifen für den Bereich oder den Teil des Streifens hinter oder nach dem Passieren der Richtungsänderung erreicht oder gewährleistet werden. Da zur Führung und zur Bereitstellung des Streifens sich Rollen oder Räder ohnehin anbieten, weil diese eine entsprechend genaue und gezielte Führung des Streifens erlauben, kann die Richtungsänderung von wenigstens 90° bevorzugt durch eine Umschlingung um ein solches Rad oder eine solche Rolle erreicht werden.

In einer weiteren, bevorzugten Ausführungsform des Verfahrens kann vorgesehen sein, dass der Streifen vor der Zufuhr eine Anpressstelle, bevorzugt gebildet durch Oberflächen von wenigstens zwei aufeinander zu kraftbeaufschlagten, rotierbaren Rädern oder Rollen, durchläuft. Als Anpressstelle zu verstehen ist dabei eine Vorrichtung, welche den Streifen in der Anpressstelle oder beim Durchlaufen der Anpressstelle auf eine oder mehrere Oberflächen kraftbeaufschlagt oder anpresst. Ein Durchlauf durch eine solche Anpressstelle, beispielsweise gebildet durch aufeinander zu oder gegeneinander kraftbeaufschlagte Räder oder Rollen oder deren aufeinander zugewandten Oberflächen oder Außenflächen, kann einerseits die Reduzierung von Kräften, insbesondere die Reduzierung von Zugkräften zusätzlich oder alternativ zu einer Richtungsänderung des Streifens bewirken, die wie oben dargestellt, besonders vorteilhaft ist, um den Streifen, gerade in einem erwärmten Zustand, in den Prozess der Verschweißung oder Verbindung der Längsrandseiten des Foliensubstrats einzubeziehen, andererseits kann die Anpressstelle derart auf den Streifen wirken, dass in Durchlaufrichtung des Streifens hinter oder nach der Anpressstelle ein sehr gut definierter Bewegungszustand des Streifens, insbesondere im Hinblick auf Richtung und/oder Querbeschleunigungen vorliegt, sodass die Anpressstelle in gewissen Maßen als Beruhigungs- oder Ausrichtungsmittel für den Streifen vor oder während seiner Zufuhr wirkt.

Weiter kann in einer besonders bevorzugten Variante des Verfahrens vorgesehen sein, dass die noch unverbundenen Längsrandseiten in den, bevorzugt auf dem Zuführmittel angeordneten, erwärmten Streifen eingedrückt werden, bevor eine Verbindung, insbesondere Verschweißung, der Längsrandseiten erfolgt. Dadurch können verschiedene Vorteile erreicht werden. Einerseits kann bei der Kontaktierung zwischen den Längsrandseiten des Foliensubstrats und des Streifens vor der Ausbildung der Schweißnaht oder Verbindung der Längsrandseiten bereits eine gewisse Anheftung oder die Ausbildung einer gewissen Vorabverbindung erreicht werden, da der Streifen ja bereits erwärmt, bevorzugt auf eine Temperatur oberhalb der Plastifizierungstemperatur erwärmt ist und somit auch bereits ein gewisses Anhaften der gegebenenfalls noch kalten oder nicht erwärmten Längsrandseiten des Foliensubstrats ermöglicht. Andererseits kann durch die Vorabkontaktierung oder Vorabinkontaktbringung zwischen dem Streifen und den Längsrandseiten ein Einbetten des Streifens unter Verbreiterung des Streifens quer zur Längsrichtung oder quer zur Vorschubrichtung erreicht werden, sodass wiederum die erreichte und gewollte Plastizität des Streifens in einer gewissen Vorverformung bereits aufgenommen oder kompensiert wird, sodass der vorverformte Streifen dann bei der entsprechend nachfolgenden Ausbildung der Verbindung oder Längsschweißnaht nicht mehr oder zumindest nicht mehr so stark dazu neigt an einer Übergangsstelle, an der zusätzliche Drücke und Wärme auf den Streifen und auf die Längsrandseiten einwirken Wellen zu schlagen oder seitlich Schlingerbewegungen zu vollführen.

Die oben genannte Aufgabe wird auch mit einer Vorrichtung zur Herstellung von flexiblen Tubenkörpern für Verpackungstuben aus einem, bevorzugt auf einer Außenseite eine Bedruckung aufweisenden, Foliensubstrat, welches mindestens eine verschweißbare Kunststoffschicht aufweist oder aus dieser besteht und welches eine sich in eine Längsrichtung erstreckende erste Längsrandseite und eine hierzu parallele und beabstandete zweite Längsrandseite umfasst gelöst, wobei die Vorrichtung Umformmittel aufweist, um das Foliensubstrat zu einem Rohrkörper zu formen und wobei die Vorrichtung ferner Verbindungsmittel aufweist, um die beiden Längsrandseiten, in einem zum Rohrkörper umgeformten Zustand unter Ausbildung einer Längsschweißnaht zu verbinden, insbesondere miteinander zu verschweißen, wobei im Bereich der Längsschweißnaht im Inneren und/oder Äußeren des zum Rohrkörper umgeformten Foliensubstrats ein Streifen angeordnet und mit Verbindungsmitteln zumindest bereichsweise oder abschnittsweise mit den Längsrandseiten verbunden, insbesondere verschweißt wird, wobei der Streifen mittels Heizmitteln vor der Verbindung mit den Längsrandseiten erwärmt, bevorzugt auf eine Temperatur oberhalb der Plastifizierungstemperatur des Streifens, erwärmt wird. Erfindungsgemäß ist zudem vorgesehen, dass durch eine Bereitstellungseinheit, die eine Antriebseinheit umfasst, die eine Zuführgeschwindigkeit des Streifens regelt, die Zuführgeschwindigkeit des Streifens so eingestellt wird, dass diese geringer ist als die Vorschub- oder Verschweißgeschwindigkeit der Längsrandseiten des Foliensubstrats in Längsrichtung. Insgesamt werden durch die erfindungsgemäße Vorrichtung die gleichen oder zumindest ähnlichen Vorteile und vorteilhafte Wirkungen erreicht, wie mit dem vorangehend beschriebenen erfindungsgemäßen Verfahren.

Zur Vermeidung unnötiger Wiederholungen soll deshalb, im Hinblick auf den Grundgedanken der Erfindung sowie auch im Hinblick auf vorteilhafte Einzelheiten der Vorrichtung auf die vorangegangene Beschreibung des Verfahrens Bezug genommen werden. Allgemein sollen verfahrensmäßig offenbarte Merkmale, Eigenschaften und Vorteile auch als vorrichtungsmäßig offenbart und beschrieben gelten und umgekehrt.

Zusammengefasst wird mit der erfindungsgemäßen Vorrichtung erreicht, dass mögliche Probleme bei der Verarbeitung des erwärmten Streifens, insbesondere bei der Verbindung oder der Verschweißung der Längsrandseiten unter Einbindung oder zusammen mit dem erwärmten Streifen verhindert oder minimiert werden.

Gemäß einer ersten vorteilhaften Ausführungsform der Vorrichtung kann vorgesehen sein, dass die Antriebseinheit mit Zuführmitteln für die Längsrandseiten des Foliensubstrats, bevorzugt ein endlos umlaufendes Band, in Wirkverbindung steht und die Antriebseinheit von der Bewegung der Zuführmittel angetrieben wird. Dies hat den Vorteil, dass dann die Zufuhr des Streifens mittelbar über die Zuführmittel der Längsrandseiten mitgesteuert wird, sodass beispielsweise bei der Anpassung von Prozessparametern bezüglich der Zufuhr der Längsrandseiten oder insgesamt der Zufuhr des Foliensubstrats automatisch auch eine Anpassung bei der Zufuhr des Streifens sichergestellt ist.

Die Wirkverbindung kann beispielsweise über eine mechanische Kopplung, beispielsweise eine formschlüssige oder kraftschlüssige Verbindung zwischen einem Teil der Zuführmittel der Längsrandseiten einerseits und einem Teil der Antriebseinheit andererseits bereitgestellt werden. Für den Fall, dass die Zuführmittel ein oder mehrere endlos umlaufene Bänder umfassen, kann beispielsweise ein rotatorisch antreibbares Element der Antriebseinheit auf dem endlos umlaufenden Band der Zuführmittel zur Anlage kommen und bei ausreichend großer Haftung oder Reibungskräften so die Bewegung des endlos umlaufenden Bandes in eine Rotationsbewegung übertragen oder umsetzen, die dann wiederum die Steuerung und/oder Bewegung der Antriebseinheit verursacht, steuert, und/oder beeinflusst.

Weiterhin kann vorteilhaft vorgesehen sein, dass in Längsrichtung der Bereitstellungseinheit nachgeordnet Führungsmittel angeordnet sind, die einen, bevorzugt auf Zuführmitteln abgegebenen oder zugeführten Streifen führen. Wie oben bereits beschrieben, können die Führungsmittel beispielsweise als Walzrollen oder Führungsrollen ausgebildet sein. Vorteilhaft können mehrere verschiedene Rollen als Führungsmittel hintereinander in Längsrichtung angeordnet sein. Bevorzugt sind die Führungsmittel in Längsrichtung auf der gleichen Höhe wie die Heizmittel zum Erwärmen des Streifens über die Plastifizierungstemperatur angeordnet.

Gemäß einer weiteren, besonders wünschenswerten Weiterbildung der Vorrichtung kann vorgesehen sein, dass die Antriebseinheit eine Übersetzungseinrichtung aufweist, die eine Verlangsamung des Streifens bewirkt. Die Übersetzungseinrichtung kann besonders dann vorteilhaft eingesetzt werden, wenn eine Wirkverbindung zwischen der Antriebseinheit und den Zuführmitteln für die Längsrandseiten des Foliensubstrats besteht. In diesem Fall kann die Verlangsamung des Streifens oder der Zufuhr des Streifens gegenüber der Zufuhr der Längsrandseiten des Foliensubstrats in einem gewünschten oder gewollten Verhältnis erreicht werden. Bevorzugt kann die Übersetzungseinrichtung mechanischer Natur sein oder mit mechanischen Mitteln realisiert werden. Alternativ können aber auch elektrische oder elektronische Übersetzungsmechnismen zum Einsatz kommen.

Insgesamt kann alternativ auch die Steuerung der Antriebseinheit unabhängig oder separat von den Zuführmitteln zur Zufuhr der Längsrandseiten des Foliensubstrats erfolgen. Dies bringt zwar die Anforderung mit sich, dass die Antriebseinheit dann selbstständig unabhängig angesteuert und gegebenenfalls über geeignete Regelungstechnik an die Bewegung oder Geschwindigkeit der Zuführmittel des Foliensubstrats angepasst werden muss, führt aber gleichzeitig dazu, dass eine Unterbrechung der Wirkverbindung zwischen der Antriebseinheit und den Zuführmitteln als potentielle Schwachstelle oder potentielle Fehlerquelle eliminiert wird. Außerdem kann bei einer solchen Ausführung die Geschwindigkeit der Antriebseinheit und damit das Verhältnis zur Vorschub- oder Verschweißgeschwindigkeit des Foliensubstrats frei gewählt und auch angepasst werden. Durch etwaige Rückkopplungs- oder Regelungsmechanismen kann die Geschwindigkeit sogar während des Betriebs der Vorrichtung oder während des Verfahrens eingestellt oder nachgestellt werden.

In einer weiteren, besonders bevorzugten Variante der Vorrichtung kann vorgesehen sein, dass die Bereitstellungseinheit eine Umschlingungseinrichtung umfasst, die eine Spannungsreduktion, insbesondere eine Zugspannungsreduktion, des Streifens beim Passieren der Umschlingungseinrichtung, bevorzugt durch eine Richtungsänderung des Streifens um mindestens 90° bewirkt. Dies kann besonders vorteilhaft dadurch erreicht werden, dass eine Haftreibung zwischen dem Streifen und der Umschlingungseinrichtung erzeugt oder bewirkt wird und gleichzeitig die Umschlingungseinrichtung eine aktive Bewegung vorgibt oder ausführt, die dann mittels Haftreibung auf den Streifen übertragen wird. Bevorzugt kann die Umschlingungseinrichtung ein aktiv angetriebenes Rad aufweisen, auf dessen Umfangsoberfläche der Streifen zur Anlage gebracht und von dem Rad mitgeführt oder mittransportiert wird. Je größer oder je länger der Teil des Umfangs des Rads ist, an dem der Streifen anliegt, umso besser kann eine Kräftereduzierung oder Spannungsreduzierung auf den Streifen durch die so ausgebildete Umschlingungseinrichtung erreicht werden. Wie oben bereits ausgeführt, ist es einerseits wünschenswert den Streifen mit möglichst gut definierten Kräften oder Zugkräften zu der Bereitstellungseinheit zu transportieren. Gleichzeitig ist es gleichermaßen wünschenswert beim oder nach dem Passieren der Bereitstellungseinheit den Streifen möglichst kräftefrei oder nur mit minimaler Kräftebeaufschlagung den Längsrandseiten des Foliensubstrats oder den Zuführmitteln zuzuführen oder zu übergeben. Beide Ziele können besonders vorteilhaft mit einer, bevorzugt wie vorangehend beschriebenen, aktiv angertriebenen Umschlingungseinrichtung erreicht werden, die einerseits den definierten Transport des Streifens zur Bereitstellungseinheit sicherstellen, gleichzeitig jedoch eine ausgangsseitig weitestgehend kräftefreie Ausgabe des Streifens und damit eine kräftefreie Zufuhr des Streifens auf die Zuführmittel und/oder zu den Längsrandseiten des Foliensubstrats erreicht.

In einer weiteren bevorzugten Ausgestaltung der Vorrichtung kann vorgesehen sein, dass die Bereitstellungseinheit eine Anpressstelle umfasst, bevorzugt gebildet durch Oberflächen zweier aufeinander zu kraftbeaufschlagter, rotierbarer Räder oder Rollen. Auch zu der Funktion und vorteilhaften Wirkung der Anpressstelle wurde bereits oben bei der Beschreibung des Verfahrens ausgeführt. Die Anpressstelle kann zur weiteren Spannungsreduktion, insbesondere Zugspannungsreduktion, und zur definierten Ausgabe des Streifens oder zur definierten Weiterleitung des Streifens von der Bereitstellungseinheit an oder auf die Zuführmittel dienen. Besonders bevorzugt können Elemente oder Bestandteile einer Umschlingungseinrichtung auch Teil einer Anpressstelle sein oder teilweise die Anpressstelle ausbilden.

Eine weitere, besonders wünschenswerte Ausführungsform der Vorrichtung sieht vor, dass die Umschlingungseinrichtung und/oder die Anpressstelle und/oder die Antriebseinrichtung durch die Oberflächen wenigstens zweier, rotierbarer Räder gebildet werden. Denn bei einer entsprechenden Führung des Streifens um die wenigstens zwei Räder oder deren Oberfläche lässt sich einfach eine Umschlingung von mehr als 90° erreichen. Wenn die Räder oder andere Räder zusätzlich aufeinander zu kraftbeaufschlagt werden, resultiert ferner daraus die vorteilhafte Anpressstelle. Und wenn eines der Räder zusätzlich noch mit den Zuführmitteln zur Zufuhr der Längsrandseiten des Foliensubstrats in Wirkverbindung steht, kann auch vorteilhaft die Antriebseinrichtung der Bereitstellungseinheit durch das Räderpaar oder Rollenpaar ausgebildet werden.

Eine weitere, besonders bevorzugte Ausführungsform der Vorrichtung kann vorsehen, dass die Bereitstellungseinheit und/oder die Führungsmittel senkrecht zur Längsrichtung mit elastisch verformbaren Federmitteln gelagert sind, bevorzugt um eine konstante Anlage oder eine konstante Anpressung des Streifens an die Zuführmittel sicherzustellen.

Die eingangs genannte Aufgabe wird auch durch einen Tubenkörper für Verpackungstuben aus einem, bevorzugt auf einer Außenseite eine Bedruckung aufweisenden, Foliensubstrat gelöst, welches mindestens eine verschweißbare Kunststoffschicht aufweist oder aus dieser besteht und welches eine sich in eine Längsrichtung erstreckende erste Längsrandseite und eine hierzu parallele und beabstandete zweite Längsrandseite umfasst, wobei das Foliensubstrat mit Umformmitteln zu einem Rohrkörper geformt ist und die beiden Längsrandseiten unter Ausbildung einer Längsschweißnaht verbunden, insbesondere miteinander verschweißt, sind, und wobei erfindungsgemäß der Tubenkörper mit einem Verfahren gemäß der vorangehend beschriebenen Verfahrensvarianten und/oder einer Vorrichtung gemäß der ebenfalls vorangegangenen Beschreibung hergestellt ist.

Weiterhin wird die oben definierte Aufgabe auch anhand einer Verpackungstube mit einem Tubenkopf und einem am Tubenkopf befestigten Tubenkörper, wie oben angegeben, gelöst.

Die Erfindung, insbesondere das erfindungsgemäße Verfahren und die erfindungsgemäße Vorrichtung, werden nachfolgend anhand der beispielhaften, schematischen Zeichnungen erörtert, welche Ausführungsbeispiele und vorteilhafte Ausgestaltungen zeigen.

Darin zeigt
- Fig. 1:: einen Ausschnitt aus einer erfindungsgemäßen Vorrichtung gemäß einer ersten Ausführungsform;
- Fig. 2:: ein Ausschnitt aus einer erfindungsgemäßen Vorrichtung in einer zweiten Ausführungsform;
- Fig. 3:: ein Ausschnitt aus einer erfindungsgemäßen Vorrichtung in einer dritten Ausführungsform.

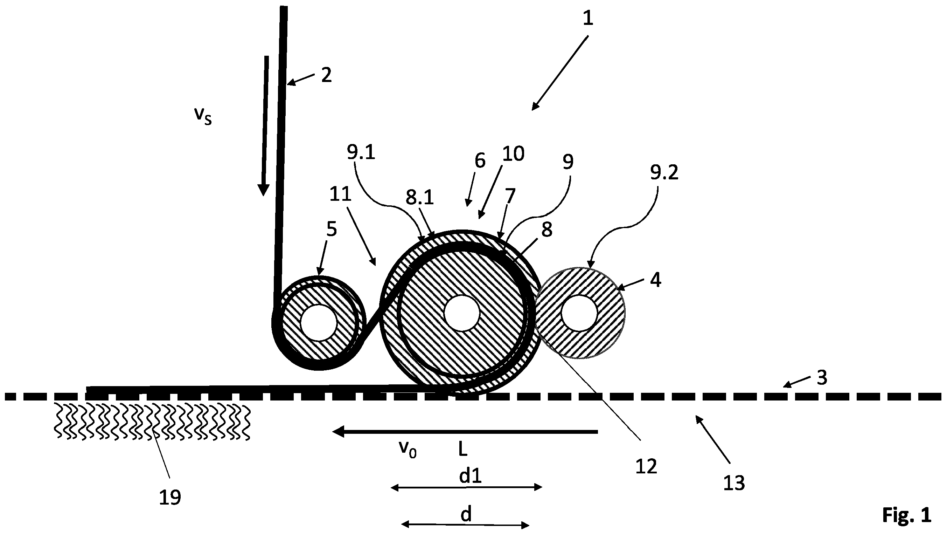

Fig. 1 zeigt einen Ausschnitt aus einer erfindungsgemäßen Vorrichtung 1 zur Herstellung von flexiblen Tubenkörpern für Verpackungstuben. Der Ausschnitt kann Teil einer Produktionslinie oder Gesamtvorrichtung sein, bei der zunächst Tubenkörper aus Foliensubstrat hergestellt werden und anschließend die Tubenkörper an einem Ende oder an einer Seite mit Tubenköpfen verbunden werden, um so rückseitig zur Befüllung offen bleibende Verpackungstuben zu realisieren.

In der Darstellung der Fig. 1 ist ein Ausschnitt der Vorrichtung 1 gezeigt. Dieser Teil der Vorrichtung betrifft die Ausbildung der Verbindung oder Verschweißung der Längsrandseiten des Foliensubstrats. Die Umformung zum Rohrkörper ist hinlänglich bekannt und daher in der Fig. 1 nicht im Detail dargestellt. Gleiches gilt auch für die Vereinzelung des hergestellten oder verschweißten Endlosrohres zu den einzelnen Tubenkörpern, was in der Regel im Nachgang zur Verbindung der Längsrandseiten des Foliensubstrats erfolgt.

Fig. 1 zeigt folglich ein Teil eines umlaufenden Bandes 3, das zusammen mit anderen in der Darstellung der Fig. 1 nicht dargestellten Mitteln als Zuführmittel 13 des Foliensubstrats oder der Längsrandseiten des Foliensubstrats dient. Zusätzlich zu dem ersten umlaufenden Band 3, welches beispielsweise ein inneres Band darstellt, wird in gattungsgemäßen Vorrichtungen ein weiteres umlaufendes Band als äußeres Band oder Außenband benutzt, um die Längsrandseiten, die auf Stoß, überlappend oder in sonstiger, vergleichbarer Weise angeordnet oder ausgerichtet werden, während oder dadurch dass das Foliensubstrat zum Rohrkörper umgeformt wird, miteinander zu verbinden, insbesondere miteinander zu verschweißen. Die Bänder dienen in bekannter Weise zum Transport und/oder Einzug des Foliensubstrats und unterstützen die Umformung, bevorzugt um einen Dorn. Die Bänder dienen ferner zur Wärmeübertragung im Bereich der Schweißzone der Vorrichtung, in der die Verbindung der Längsrandseiten ausgebildet wird.

Dazu wird das Foliensubstrat so um einen Dorn oder Führungsdorn gelegt, oder an diesem vorbei transportiert, dass die Längsrandseiten des Foliensubstrats so in einen Zwischenraum zwischen dem inneren Band 3 und dem nicht dargestellten äußeren Band gelangen oder eingeführt werden, dass die Bänder durch eine entsprechende Verringerung des Abstands der Bänder zueinander und durch die, bevorzugt lokale Beheizung der Bänder mit Heizmitteln, die Bänder eine Druckkraft und Wärme auf die Längsrandseiten des Foliensubstrats ausbilden und damit die Verbindung der Längsrandseiten herstellen oder bewirken.

Mit dem Zuführmittel 13 und dem Band 3 soll nicht nur die Führung und Verbindung der Längsrandseiten des Foliensubstrats bewirkt werden, sondern das Band 3 oder die Zuführmittel 13 dienen weiterhin auch als Auflage oder Ablage für einen Streifen 2. Der Streifen 2 besteht aus einem mit dem Foliensubstrat, insbesondere mit der Außenlage und/oder der Innenlage des Foliensubstrats verschweißbaren Material und weist bevorzugt thermoplastische Eigenschaften auf, sodass eine plastische Verformung des Streifens 2 oberhalb einer Plastifizierungstemperatur möglich ist.

Der Streifen 2 wird zusammen mit den Längsrandseiten verbunden, um somit eine verbesserte Naht oder verbesserte Nahteigenschaften der Längsschweißnaht entlang der Längsrandseiten des Foliensubstrats zu erreichen. Der Streifen 2 soll bevorzugt in einem erwärmten, besonders bevorzugten plastisch erwärmten Zustand mit den Längsrandseiten des Foliensubstrats in Verbindung gebracht werden, weshalb die Vorrichtung Heizmittel 19 vorsieht. Die Heizmittel 19 sind, wie in der Fig. 1 angedeutet an einer Position angeordnet, in der zwar der Streifen 2 bereits auf den Zuführmitteln 13, bevorzugt dem endlos umlaufenen Band 3 angeordnet oder abgelegt ist, in dem jedoch noch keine Kontaktierung mit den Längsrandseiten des Foliensubstrats erzeugt oder bewirkt wurde. Dies ermöglicht, dass der Streifen 2 mit den Heizmitteln 19 erwärmt, bevorzugt bis oberhalb der Plastifizierungstemperatur erwärmt wird, bevor der Streifen 2 mit den in der Fig. 1 nicht dargestellten Längsrandseiten zwischen dem inneren Band 3 und einem weiteren, nicht dargestellten äußeren Band in Verbindung gebracht wird oder kontaktiert wird.

Die Verwendung eines erwärmten, bevorzugt eines bis zum plastischen Zustand erwärmten, Streifens 2 hat verschiedene Vorteile für die Verfahrensführung sowie für die Ausbildung der Längsschweißnaht des zum Rohrkörper umgeformten oder verformten Foliensubstrats.

Die Erwärmung bringt aber den Nachteil mit sich, dass sich die Überführung des Streifens 2 in einen plastischen Zustand oder plastisch verformbaren Zustand die Handhabung des Streifens 2 schwieriger gestaltet. So geht mit der Erwärmung des Streifens 2 eine Längenänderung einher, die ihrerseits wieder dafür sorgen kann oder Grund dafür sein kann, dass beim Zusammenführen des Streifens 2 mit den Längsrandseiten des Laminats eine temporäre Wulstbildung entstehen kann oder der Streifen quer zur Längsrichtung L ausbricht und zu schlingern beginnt, was ebenfalls nachteilige Auswirkungen auf die resultierende Längsschweißnaht hat.

Deshalb ist erfindungsgemäß vorgesehen, dass der Streifen 2 über eine Bereitstellungseinheit 6 der Vorrichtung, insbesondere den Zuführmitteln 13, besonders bevorzugt dem Band 3 zugeführt wird, wobei die Bereitstellungseinheit 6 eine Antriebseinheit 7 umfasst, die die Zuführgeschwindigkeit v_{S} des Streifens 2 geringer einstellt als die Vorschub- oder Verschweißgeschwindigkeit v₀ des Foliensubstrats in Längsrichtung L. Dies wird gemäß Ausführungsform der Fig. 1 dadurch erreicht, dass die Antriebseinheit 7 zwei koaxial gelagerte und miteinander verbundene Räder 8 und 8.1 aufweist, die unterschiedliche Durchmesser d, d1 aufweisen. Das Rad 8.1 mit dem größeren Durchmesser d1 liegt mit einer Außenoberfläche 9.1 auf dem Band 3 der Zuführmittel 13 auf oder an. Die Anlage oder das Abrollen auf dem Band 3 des Zuführmittels ist so ausgebildet, dass ein Rutsch oder Durchrutschen des Rads 8.1 verhindert wird. Folglich ist die Geschwindigkeit der Oberfläche 9.1 gleich der Vorschub- oder Verschweißgeschwindigkeit v₀ des Foliensubstrats und dessen Längsrandseiten. Das Rad 8 mit dem kleineren Durchmesser d, welches über die Verbindung mit dem Rad 8.1 in der Winkelgeschwindigkeit gleich schnell rotiert wie das Rad 8.1, hat auf seiner Oberfläche 9 jedoch eine kleinere oder geringere Geschwindigkeit als die Oberfläche 9.1, wobei das Verhältnis der Geschwindigkeiten dem Verhältnis des Umfangs der jeweiligen Oberflächen 9 und 9.1 zueinander entspricht.

Wie in der Fig. 1 dargestellt, wird der Streifen 2 innerhalb der Bereitstellungseinheit 6 zunächst über eine erste Rolle 5 geleitet. Diese Rolle hat einerseits einen Führungszweck und dient auch bereits zur Vergrößerung oder Maximierung der Umschlingung des Streifens an der nachfolgenden Rolle oder dem nachfolgenden Rad 8. Im Anschluss daran wird der Streifen 2 über die Oberfläche 9 des inneren oder kleineren Rads 8 der Antriebseinheit 7 geführt, wobei die Rotationsgeschwindigkeit der Räder 8 und 8.1 durch das Band 3 vorgegeben wird und über die Rotation des Rads 8.1 mit dem größeren Durchmesser d1 auf das Rad 8 mit dem kleineren Durchmesser d übertragen wird. Die beiden koaxial gelagerten, drehfest miteinander verbunden Räder 8, 8.1 bilden damit auch eine Übersetzungseinrichtung 10 aus. Damit ist ersichtlich, dass die Zuführgeschwindigkeit v_{S} des Streifens 2 durch die Bereitstellungseinheit 6 und die Antriebseinheit 7 so geregelt ist, dass diese geringer ausfällt als die Vorschub- oder Verschweißgeschwindigkeit v₀ der Längsrandseiten des Foliensubstrats in Längsrichtung L. Die Räder 8 und 8.1 der Antriebseinheit 7 wirken somit als Übersetzungseinrichtung 10, die eine Verlangsamung des Streifens 2 bewirkt.

In der Fig. 1 ist erkennbar, dass der Streifen 2, beispielsweise von einer Bevorratungsvorrichtung kommend, zunächst die Rolle 5 passiert, um dann, wie bereits vorangehend beschrieben, über die Oberfläche 9 des Rades 8 geführt zu werden.

Das Rad 8 bewirkt, unterstützt durch die Führung durch das vorangehend passierte Rad 5 dabei eine Richtungsänderung des Streifens 2 von insgesamt über 90°. Diese Richtungsänderung aufgrund der Umschlingung des Streifens 2 um das Rad 8 sorgt dafür, dass der Streifen 2 nach dem Passieren des Rades 8 aus dem Rad 8 gebildeten Umschlingungseinrichtung 11 weitestgehend kräftefrei ist, sodass der Streifen 2 mit minimalen Restzugkräften auf die Zuführmittel 13, bevorzugt das Band 3 aufgebracht oder abgelegt werden kann. Über die Variation der Höhe des Rads 5 gegenüber dem Rad 8 kann der Umschlingungswinkel und damit die Wirkung der Umschlingungseinrichtung 11 beeinflusst werden, so verringert sich der Umschlingungswinkel, wenn das Rad 5 gegenüber dem Rad 8 höher angeordnet oder montiert wird. Da das Rad 5 nicht angetrieben ist, bewirkt diese keine Kräftereduzierung auf den Streifen 2 durch eine Umschlingungswirkung. Das angetriebene Rad 8 übt eine Haftreibung auf den Streifen 2 und damit eine Kraftreduzierung aus.

Im Beispiel der Fig. 1 ist noch ein weiteres Mittel vorgesehen, welches sowohl die Reduzierung der Zugkräfte auf den Streifen 2 zum Abschluss des Durchlaufs durch die Bereitstellungseinheit 6 verringert und gleichzeitig einen definierten Ausgangszustand des Streifens 2 nach Durchqueren der Bereitstellungseinheit 6, insbesondere im Hinblick auf Ausrichtung und Geschwindigkeit erreicht, gezeigt. Dabei handelt es sich um das weitere Rad 4, welches zusammen mit dem Rad 8 eine Anpressstelle 12 zwischen den Rädern 4, 8 ausbildet, wobei bevorzugt das Rad 4 auf das Rad 8 zu kraftbeaufschlagt ist. Die Anpressstelle 12 für den Streifen 2 wird durch die Oberflächen 9 und 9.2 der Räder 8 und 4 jeweils in dem Bereich gebildet, der zwischen den Achsen oder Aufhängungen der Räder 4 und 8 befindlich ist.

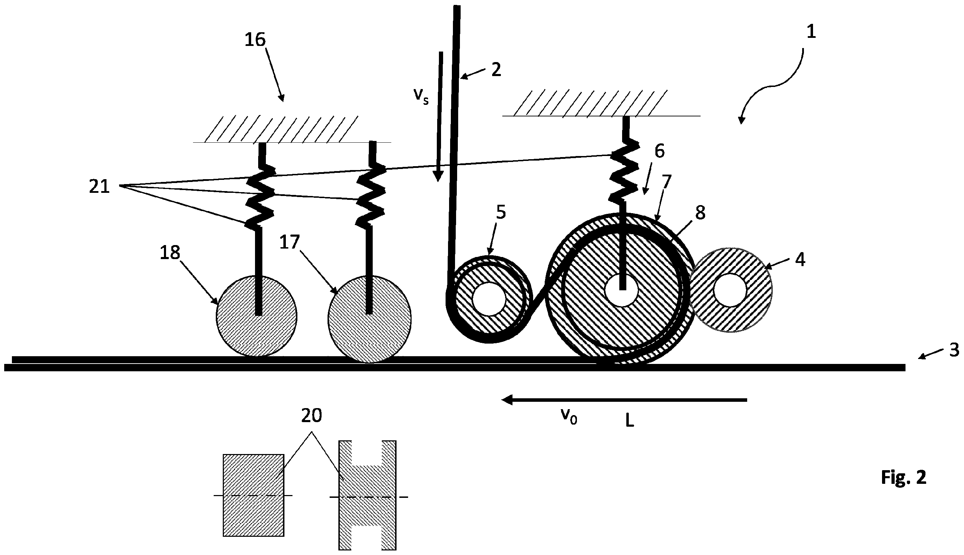

In der Fig. 2 ist eine abgewandelte Ausführungsform gegenüber der Fig. 1 dargestellt. Der Streifen 2 wird zwar, wie in der Fig. 1, über die Bereitstellungseinheit 6 samt Umschlingungseinrichtung 11 zugeführt, nach der Zufuhr oder Abgabe des Streifens 2 vom Rad 8 auf die Zuführmittel oder das Band 3, sind in Längsrichtung L der Bereitstellungseinheit nachgeordnet jedoch anders als in der Fig. 1 Führungsmittel 16 vorgesehen, die die Führung des Streifens 2 auf den Zuführmitteln verbessern. Im Beispiel der Fig.2 sind die Führungsmittel als zwei hintereinander angeordnete Rollen ausgebidlet, von denen die erste Rolle als Führungsrolle 17 und die zweite Rolle als Walzrolle 18 ausgebildet ist, was auch den unterhalb des Bandes zu Veranschaulichungszwecken dargestellten Seitenansichten der Rollenprofile 20 zu entnehmen ist.

Die Führungsmittel 16, insbesondere die Führungsrolle 17 und die Walzrolle 18 sind in der Ausgestaltung der Fig. 2 senkrecht zur Längsrichtung L mit elastisch verformbaren Federmitteln 21 gelagert, insbesondere um eine konstante Anlage oder eine konstante Anpressung an die Zuführmittel 13 sicherzustellen Ein weiterer Unterschied gegenüber der Fig. 1 besteht darin, dass auch die Bereitstellungseinheit 6, insbesondere die Antriebseinheit 7 der Bereitstellungseinheit 6 ebenfalls mit elastisch verformbaren Federmitteln 21 gelagert ist. Im Fall der Antriebseinheit 7 kann dadurch nicht nur die Führung des Streifens 2 stabilisiert werden, sondern auch ein sicherer rutschfreier Kontakt zwischen der Antriebseinheit 7 und dem Band 3 sichergestellt werden. Die Führungsmittel 16 können bevorzugt in Längsrichtung L etwa auf gleicher Höhe angeordnet sein, wie die Heizmittel 19.

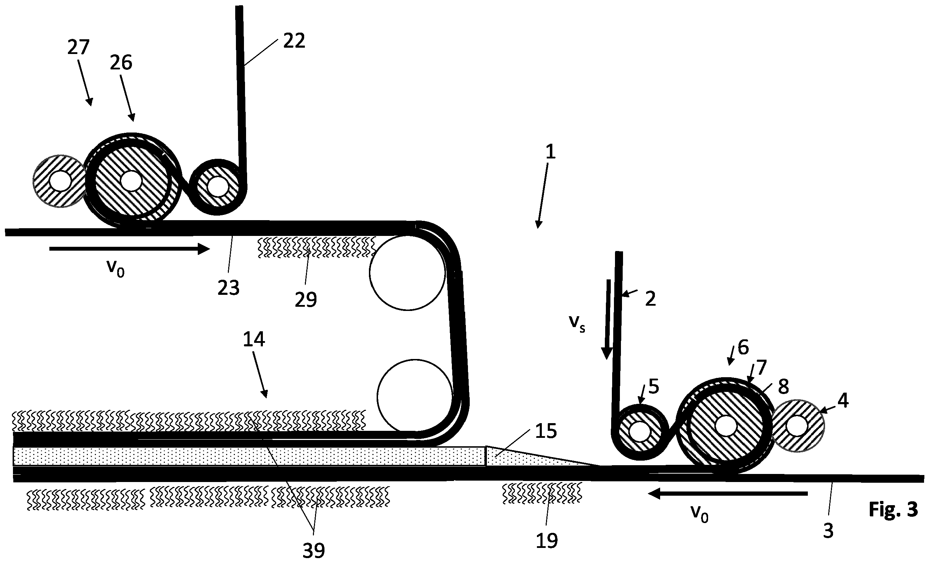

Die Fig. 3 zeigt eine erweitere Ausführungsform gegenüber der Fig. 1. Hier ist neben dem inneren Band auch das äußere Band 23 gezeigt. Das äußere Band 23 ist, wie auch das innere Band 3 als endlos umlaufendes Band ausgebildet. Wie oben bereits beschrieben sind in einer Schweißzone 14 Heizmittel 39 vorgesehen, die es ermöglichen, dass das Foliensubstrat 15 im Bereich der Längsrandseiten unter Ausbildung einer Schweißnaht miteinander verbunden, insbesondere miteinander verschweißt wird. Die Fig. 3 zeigt eine Bereitstellungseinheit 6, wie bereits in der Fig. 1 dargestellt und vorangehend beschrieben. Der Unterschied der Fig. 3 gegenüber der Fig. 1 im Hinblick auf die Bereitstellung des Streifens 2 durch die Bereitstellungseinheit 6 ist im Wesentlichen darin zu sehen, dass die Heizmittel 19 in einem Bereich angeordnet sind, in dem auch bereits das Foliensubstrat 15 um einen Dorn gelegt und zum Rohrkörper umgeformt ist. Dadurch wird der Streifen 2 erst erwärmt, wenn er bereits mit den Längsrandseiten des Foliensubstrats 15 in Verbindung oder zumindest in unmittelbare Nähe gebracht ist. Anders und damit eher der Ausführungsform der Fig. 1 entsprechend ist die Situation bezüglich einer vorteilhaften aber keinesfalls erfindungswesentlichen Bereitstellung eines zweiten Streifens 22 auf das äußere Band 23. Die Bauteile und Funktionsweise der Bereitstellungseinheit 27 zur Bereitstellung des Streifens 22 oder zur Zufuhr des Streifens 22 auf dem äußeren Band 23 entsprechen im Wesentlichen der Ausführungsform der Fig. 1.

Der in der Bereitstellungseinheit 26 verlangsamte und ausgangsseitig fast kräftefrei auf das Band 23 zugeführte Streifen 22 wird mit den Heizmitteln 29 erwärmt, bevorzugt bis über eine Plastifizierungstemperatur des Streifenmaterials des Streifens 22 erwärmt und wird dann im erwärmten Zustand zwischen den Bändern 23 und 3 mit dem Foliensubstrat, insbesondere den Längsrandseiten des Foliensubstrats 15 in Kontakt gebracht und im Bereich der Schweißzone 14 zur Ausbildung der Längsschweißnaht weiterverarbeitet. In einer alternativen Ausführungsform könnte die Bereitstellungseinheit 6 und damit auch der Streifen 2 entfallen und stattdessen nur der Streifen 22 über die Bereitstellungseinheit 26 zugeführt, bereitgestellt und verschweißt werden, falls eine Schweißnaht gewünscht ist, die nur auf eine Außenseite mit einem entsprechenden Streifen 22 versehen oder verstärkt ist. Durch die Bereitstellungseinheit 6, 26 wird die Zuführgeschwindigkeit v_{S} des Streifens 2 oder 22 bevorzugt so verringert, dass diese zwischen 65% und 95%, bevorzugt zwischen 70% und 90%, besonders bevorzugt zwischen 75% und 85% der Vorschub- oder Verschweißgeschwindigkeit v₀ der Längsrandseiten des Foliensubstrats in Längsrichtung L liegt.

Wie oben bereits erwähnt, kann die Reduktion der Geschwindigkeit oder die prozentuale Veränderung der Geschwindigkeit in den Beispielen der Fig. 1 und 2 anhand der Verhältnisse der Umfänge der jeweiligen Räder 8 und 8.1 ermittelt werden. Bei alternativen Ausführungsformen, bei denen die Bereitstellungseinheit eine Antriebseinheit umfasst, die nicht über die Zuführmittel 13, insbesondere die Bänder 3, 23, gesteuert werden, sondern bei denen die Antriebseinheiten 7 autark, unabhängig oder eigenständig angetrieben und gesteuert werden, wird die Verlangsamung des Streifens 2 oder 22 gegenüber der Vorschub- oder Verschweißgeschwindigkeit v₀ der Längsrandseiten des Foliensubstrats dann direkt über die Steuerung der Antriebseinheiten vorgegeben und erzielt.

Die Ausführungsform der Fig. 2 und 3 lassen sich auch miteinander kombinieren, so dass gegebenenfalls auf dem äußeren und/oder dem inneren Band 3, 23 Führungsmittel 16 und/oder Federmittel 21 für die Bereitstellungseinheit und/oder die Führungsmittel zum Einsatz kommen können.

### Bezugszeichen

- 1: Vorrichtung
- 2: Streifen
- 3: Band
- 4: Rad
- 5: Rolle
- 6: Bereitstellungseinheit
- 7: Antriebseinheit
- 8, 8.1 9, 9.1,: Räder
- 9.2: Oberflächen
- 10: Übersetzungseinrichtung
- 11: Umschlingungsseinrichtung
- 12: Anpressstelle
- 13: Zuführmittel
- 14: Schweißzone
- 15: Foliensubstrat
- 16: Führungsmittel
- 17: Führungsrolle
- 18: Walzrolle
- 19: Heizmittel
- 20: Rollenprofile
- 21: Federmittel
- 22: Streifen
- 23: äußeres Band
- 26: Bereitstellungseinheit
- 27: Antriebseinheit
- 29: Heizmittel
- 39: Heizmittel
- d: Durchmesser
- d1: Durchmesser

- L: Längsrichtung
- vₛ: Zuführgeschwindigkeit
- v₀: Vorschub- oder Verschweißgeschwindigkeit

## Patentansprüche

1. Verfahren zum Herstellen von flexiblen Tubenkörpern für Verpackungstuben aus einem, bevorzugt auf einer Außenseite eine Bedruckung aufweisenden, Foliensubstrat (15), welches mindestens eine verschweißbare Kunststoffschicht aufweist oder aus dieser besteht und welches eine sich in eine Längsrichtung (L) erstreckende erste Längsrandseite und eine hierzu parallele und beabstandete zweite Längsrandseite umfasst, wobei das Foliensubstrat (15) mit Umformmitteln zu einem Rohrkörper geformt und die beiden Längsrandseiten unter Ausbildung einer Längsschweißnaht verbunden, insbesondere miteinander verschweißt, werden, wobei im Bereich der Längsschweißnaht im Inneren und/oder Äußeren des zum Rohrkörper umgeformten Foliensubstrats **(15)** ein Streifen **(2, 22)** angeordnet und zumindest bereichsweise oder abschnittsweise mit den Längsrandseiten verbunden, insbesondere verschweißt, wird, wobei der Streifen **(2, 22)** mittels Heizmitteln **(19, 29, 39)** vor der Verbindung mit den Längsrandseiten erwärmt, bevorzugt auf eine Temperatur oberhalb der Plastifizierungstemperatur des Streifens **(2,22)** erwärmt, wird,
**dadurch gekennzeichnet,**
**dass** der Streifen **(2, 22)** von einer Bereitstellungseinheit **(6, 26)** so zugeführt wird, dass eine Zuführgeschwindigkeit **(vₛ)** des Streifens **(2, 22)** geringer ist als eine Vorschub- oder Verschweißgeschwindigkeit **(v₀)** der Längsrandseiten des Foliensubstrats **(15)** in Längsrichtung **(L).**

2. Verfahren nach Anspruch 1,
**dadurch gekennzeichnet,**
**dass** die Zufuhr des Streifens **(2, 22),** und insbesondere die Erwärmung des Streifens **(2, 22),** erfolgt/erfolgen, bevor die Längsrandseiten unter Ausbildung einer Längsschweißnaht verbunden, insbesondere miteinander verschweißt, werden.

3. Verfahren nach Anspruch 1 oder 2,
**dadurch gekennzeichnet,**
**dass** die Zuführgeschwindigkeit **(vₛ)** 65% bis 95%, bevorzugt 70% bis 90%, besonders bevorzugt 75% bis 85%, der Vorschub- oder Verschweißgeschwindigkeit **(v₀)** der Längsrandseiten des Foliensubstrats **(15)** in Längsrichtung **(L)** beträgt.

4. Verfahren nach einem der Ansprüche 1 bis 3,
**dadurch gekennzeichnet,**
**dass** die Zufuhr des Streifens **(2, 22)** auf Zuführmittel **(13)** für die Längsrandseiten des Foliensubstrats **(15),** bevorzugt ein endlos umlaufendes Band (**3, 23)**, erfolgt, wobei der Streifen **(2, 22)** mit Zuführmitteln **(13)** mittransportiert und während dessen erwärmt wird.

5. Verfahren nach Anspruch 4,
**dadurch gekennzeichnet,**
**dass** der Streifen **(2)** nach seiner Abgabe oder Zuführung durch die Bereitstellungseinheit **(6)** mit wenigstens einem Führungsmittel **(16)** auf den oder entlang der Zuführmittel **(13)** geführt wird, bevor die Kontaktierung mit dem Foliensubstrat erfolgt.

6. Verfahren nach einem der Ansprüche 1 bis 5,
**dadurch gekennzeichnet,**
**dass** der Streifen **(2, 22)** vor der Zufuhr, bevorzugt beim Durchlaufen der Bereitstellungseinheit **(6, 26),** eine Spannungsreduktion, insbesondere eine Zugspannungsreduktion erfährt.

7. Verfahren nach Anspruch 6,
**dadurch gekennzeichnet,**
**dass** der Streifen **(2, 22)** vor der Zufuhr eine Richtungsänderung von wenigstens 90°, bevorzugt zwischen 90° und 270°, bevorzugt durch eine Umschlingung um ein Rad **(4, 8, 8.1)** oder eine Rolle durchläuft.

8. Verfahren nach einem der Ansprüche 1 bis 7,
**dadurch gekennzeichnet,**
**dass** der Streifen **(2, 22)** vor der Zufuhr einen Anpressstelle **(12),** bevorzugt gebildet durch Oberflächen **(9, 9.1, 9.2)** zweier aufeinander zu kraftbeaufschlagter, rotierbarer Räder **(4, 8, 8.1),** durchläuft.

9. Vorrichtung zur Herstellung von flexiblen Tubenkörpern für Verpackungstuben aus einem, bevorzugt auf einer Außenseite eine Bedruckung aufweisenden, Foliensubstrat **(15),** welches mindestens eine verschweißbare Kunststoffschicht aufweist oder aus dieser besteht und welches eine sich in eine Längsrichtung **(L)** erstreckende erste Längsrandseite und eine hierzu parallele und beabstandete zweite Längsrandseite umfasst, wobei das Foliensubstrat **(15)** mit Umformmitteln zu einem Rohrkörper geformt und die beiden Längsrandseiten unter Ausbildung einer Längsschweißnaht verbunden, insbesondere miteinander verschweißt, werden, wobei im Bereich Längsschweißnaht im Inneren und/oder Äußeren des zum Rohrkörper umgeformten Foliensubstrats **(15)** ein Streifen **(2, 22)** angeordnet und mit Verbindungsmitteln zumindest bereichsweise oder abschnittsweise mit den Längsrandseiten verbunden, insbesondere verschweißt wird, wobei der Streifen **(2)** mittels Heizmitteln **(19, 29, 39)** vor der Verbindung mit den Längsrandseiten erwärmt, bevorzugt auf eine Temperatur oberhalb der Plastifizierungstemperatur des Streifens **(2, 22)** erwärmt wird,
**gekennzeichnet durch**
eine Bereitstellungseinheit **(6, 26),** die eine Antriebseinheit **(7, 27)** umfasst, die derart eingerichtet ist um eine Zuführgeschwindigkeit **(vₛ)** des Streifens **(2, 22)** derart zu regeln, dass die Zuführgeschwindigkeit **(vₛ)** des Streifens **(2, 22)** geringer ist als die Vorschub- oder Verschweißgeschwindigkeit **(v₀)** der Längsrandseiten des Foliensubstrats **(15)** in Längsrichtung **(L).**

10. Vorrichtung nach Anspruch 9,
**dadurch gekennzeichnet,**
**dass** die Antriebseinheit **(7, 27)** mit Zuführmitteln **(13)** für die Längsrandseiten des Foliensubstrats **(15),** bevorzugt ein endlos umlaufendes Band **(3, 23**) in Wirkverbindung steht und die Antriebseinheit **(7, 27)** von der Bewegung der Zuführmittel **(13)** angetrieben werden, wobei bevorzugt die Antriebseinheit **(7, 27)** eine Übersetzungseinrichtung **(10)** aufweist, die eine Verlangsamung des Streifens **(2, 22)** bewirkt.

11. Vorrichtung nach Anspruch 9 oder 10,
**dadurch gekennzeichnet,**
**dass** in Längsrichtung **(L)** der Bereitstellungseinheit **(6)** nachgeordnet Führungsmittel **(16)** angeordnet sind, die einen, bevorzugt auf Zuführmitteln **(13)** abgegebenen oder zugeführten Streifen **(2)** führen.

12. Vorrichtung nach einem der Ansprüche 9 bis 11,
**dadurch gekennzeichnet,**
**dass** die Bereitstellungseinheit **(6, 26)** eine Umschlingungseinrichtung **(11)** umfasst, die eine Spannungsreduktion, insbesondere eine Zugspannungsreduktion des Streifens **(2, 22)** beim Passieren der Umschlingungseinrichtung **(11),** bevorzugt durch eine Richtungsänderung des Streifens **(2, 22)** um mindestens 90°, bewirkt

13. Vorrichtung nach einem der Ansprüche 9 bis 12,
**dadurch gekennzeichnet**,
die Bereitstellungseinheit **(6, 26)** eine Anpressstelle **(12)** umfasst, bevorzugt gebildet durch Oberflächen **(9, 9.1, 9.2)** zweier aufeinander zu kraftbeaufschlagter, rotierbarer Räder **(4, 8, 8.1).**

14. Vorrichtung nach einem der Ansprüche 9 bis 13,
**dadurch gekennzeichnet,**
**dass** die Umschlingungseinrichtung **(11)** und die Anpressstelle **(12)** und/oder die Antriebseinrichtung durch die Oberflächen **(9, 9.1, 9.2)** wenigstens zweier aufeinander zu kraftbeaufschlagter, rotierbarer Räder **(4, 8, 8.1)** gebildet werden.

15. Vorrichtung nach einem der Ansprüche 9 bis 14,
**dadurch gekennzeichnet,**
**dass** die Bereitstellungseinheit **(6)** und/oder die Führungsmittel **(16)** senkrecht zur Längsrichtung **(L)** mit elastisch verformbaren Federmitteln **(21)** gelagert sind, bevorzugt um eine konstante Anlage oder eine konstante Anpressung an die Zuführmittel **(13)** sicherzustellen.

## Claims

1. A method for producing flexible tube bodies for packaging tubes from a film substrate (15), which preferably has printing on an outer side, the film substrate (15) having or consisting of at least one sealable plastic layer and comprising a first longitudinal-edge side, which extends in a longitudinal direction (L), and a second longitudinal-edge side, which is parallel to and spaced apart from the first longitudinal-edge side, the film substrate (15) being shaped into a tube body using shaping means, and the two longitudinal-edge sides being connected, in particular sealed together, a longitudinal seam being formed in the process, a strip (2, 22) being disposed on the inside and/or the outside of the film substrate (15) shaped into the tube body in the area of the longitudinal seam and being connected, in particular sealed, to the longitudinal-edge sides at least partially or in sections, the strip (2, 22) being heated, preferably to a temperature above the plastification temperature of the strip (2, 22), using heating means (19, 29, 39) before being connected to the longitudinal-edge sides,
**characterized in that**
the strip (2, 22) is supplied by a providing unit (6, 26) in such a manner that a supply speed (vₛ) of the strip (2, 22) is lower than a feeding or sealing speed (v₀) of the longitudinal-edge sides of the film substrate (15) in the longitudinal direction (L).

2. The method according to claim 1,
**characterized in that**
the strip (2, 22) is supplied and in particular heated before the longitudinal-edge sides are connected, in particular sealed together, forming a longitudinal seam in the process.

3. The method according to claim 1 or 2,
**characterized in that**
the supply speed (vₛ) is 65% to 95%, preferably 70% to 90%, in particular 75 % to 85 %, of the feeding or sealing speed (v₀) of the longitudinal-edge sides of the film substrate (15) in the longitudinal direction (L).

4. The method according to any one of claims 1 to 3,
**characterized in that**
the strip (2, 22) is supplied on supplying means (13) for the longitudinal-edge sides of the film substrate (15), preferably an endlessly revolving belt (3, 23), the strip (2, 22) being transported along with supplying means (13) and being heated in the process.

5. The method according to claim 4,
**characterized in that**
once the strip (2) has been transferred or supplied by the providing unit (6), the strip (2) is guided on or along the supplying means (13) by means of at least one guiding means (16) before the strip (2, 22) is brought into contact with the film substrate.

6. The method according to any one of claims 1 to 5,
**characterized in that**
before the strip (2, 22) is supplied, preferably as the strip (2, 22) is passing through the providing unit (6, 26), the strip (2, 22) undergoes a reduction in tension, in particular a reduction in tensile stress.

7. The method according to claim 6,
**characterized in that**
before the strip (2, 22) is supplied, the strip (2, 22) undergoes a change in direction of at least 90°, preferably between 90° and 270°, preferably by being deflected around a wheel (4, 8, 8.1) or a pulley.

8. The method according to any one of claims 1 to 7,
**characterized in that**
before the strip (2, 22) is supplied, the strip (2, 22) passes through a pressing point (12), which his preferably formed by surfaces (9, 9.1, 9.2) of two rotating wheels (4, 8, 8.1) pre-loaded against each other.

9. A device for producing flexible tube bodies for packaging tubes from a film substrate (15), which preferably has printing on an outer side, the film substrate (15) having or consisting of at least one sealable plastic layer and comprising a first longitudinal-edge side, which extends in a longitudinal direction (L), and a second longitudinal-edge side, which is parallel to and spaced apart from the first longitudinal-edge side, the film substrate (15) being shaped into a tube body using shaping means, and the two longitudinal-edge sides being connected, in particular sealed together, a longitudinal seam being formed in the process, a strip (2, 22) being disposed on the inside and/or the outside of the film substrate (15) shaped into the tube body in the area of the longitudinal seam and being connected, in particular sealed, to the longitudinal-edge sides at least partially or in sections, the strip (2, 22) being heated, preferably to a temperature above the plastification temperature of the strip (2, 22), using heating means (19, 29, 39) before being connected to the longitudinal-edge sides,
**characterized by**
a providing unit (6, 26) comprising a drive unit (7, 27) configured to control a supply speed (vₛ) of the strip (2, 22) in such a manner that the supply speed (vₛ) of the strip (2, 22) is lower than a feeding or sealing speed (v₀) of the longitudinal-edge sides of the film substrate (15) in the longitudinal direction (L).

10. The device according to claim 9,
**characterized in that**
the drive unit (7, 27) is in operative connection with supplying means (13) for the longitudinal-edge sides of the film substrate (15), preferably an endlessly revolving belt (3, 23), and the drive unit (7, 27) are driven by the movement of the supplying means (13), the drive unit (7, 27) preferably having a speed transformation mechanism (10) effecting a deceleration of the strip (2, 22).

11. The device according to claim 9 or 10,
**characterized in that**
guiding means (16) are disposed downstream of the providing unit (6) in the longitudinal direction (L), the guiding means (16) guiding a strip (2), which has preferably been transferred or supplied on supplying means (13).

12. The device according to any one of claims 9 to 11,
**characterized in that**
the providing unit (6, 26) comprises a deflection device (11) effecting a reduction in tension, in particular a reduction in tensile stress, of the strip (2, 22), preferably by means of a change in direction of the strip (2, 22) by at least 90°, as the strip (2, 22) is passing through the deflection device (11).

13. The device according to any one of claims 9 to 12,
**characterized in that**
the providing unit (6, 26) comprises a pressing point (12), which is preferably formed by surfaces (9, 9.1, 9.2) of two rotating wheels (4, 8, 8.1) pre-loaded against each other.

14. The device according to any one of claims 9 to 13,
**characterized in that**
the deflection device (11) and the pressing point (12) and/or the drive are formed by the surfaces (9, 9.1, 9.2) of at least two rotating wheels (4, 8, 8.1) pre-loaded against each other.

15. The device according to any one of claims 9 to 14,
**characterized in that**
the providing unit (6) and/or the guiding means (16) are mounted perpendicular to the longitudinal direction (L) by means of elastically deformable spring means (21), preferably in order to ensure constant contact with or constant contact pressure against the supplying means (13).

## Revendications

1. Procédé de fabrication de corps tubulaires souples pour des tubes d'emballage à partir d'un substrat de film (15), qui à, de préférence, une impression sur la face extérieure, le substrat de film (15) ayant ou se composant d'au moins une couche plastique scellable et comprenant un premier côté de bord longitudinal, qui s'étend dans une direction longitudinale (L), et un deuxième côté de bord longitudinal, qui est parallèle au et espacé du premier côté de bord longitudinal, le substrat de film (15) étant façonné en forme de corps tubulaire par des moyens de façonnage, et les deux côtés de bord longitudinal étant reliés, notamment scellés l'un à l'autre, tout en formant un joint de scellage longitudinal, une bande (2, 22) étant disposée sur l'intérieur et/ou sur l'extérieur du substrat de film (15) façonné en forme de corps tubulaire dans la région du joint de scellage longitudinal et étant liée, notamment scellée, aux côtés de bord longitudinal au moins en partie ou par sections, la bande (2, 22) étant chauffée, de préférence à une température supérieure à la température de plastification de la bande (2, 22), par des moyens de chauffage (19, 29, 39) avant qu'elle soit liée aux côtés de bord longitudinal,
**caractérisé en ce que**
la bande (2, 22) est fournie par une unité de fourniture (6, 26) de telle manière qu'une vitesse de fourniture (vₛ) de la bande (2, 22) est inférieure à une vitesse d'avance ou de scellage (v₀) des côtés de bord longitudinal du substrat de film (15) dans la direction longitudinale (L).

2. Procédé selon la revendication 1,
**caractérisé en ce que**
la bande (2, 22) est fournie et notamment chauffée avant que les côtés de bord longitudinal soient reliés, notamment scellés l'un à l'autre, tout en formant un joint de scellage longitudinal.

3. Procédé selon la revendication 1 ou 2,
**caractérisé en ce que**
la vitesse de fourniture (vₛ) est 65% à 95%, de préférence 70 % à 90%, notamment 75% à 85%, de la vitesse d'avance ou de scellage (v₀) des côtés de bord longitudinal du substrat de film (15) dans la direction longitudinale (L).

4. Procédé selon l'une quelconque des revendications 1 à 3,
**caractérisé en ce que**
la bande (2, 22) est fournie sur des moyens de fourniture (13) pour les côtés de bord longitudinal du substrat de film (15), de préférence une courroie (3, 23) tournant sans fin, la bande (2, 22) étant transportée avec des moyens de fourniture (13) et étant chauffée pendant ce temps.

5. Procédé selon la revendication 4,
**caractérisé en ce**
**qu'**après avoir été transférée ou fournie par l'unité de fourniture (6), la bande (2) est guidée sur les ou le long des moyens de fourniture (13) par au moins un moyen de guidage (16) avant d'être mise en contact avec le substrat de film.

6. Procédé selon l'une quelconque des revendications 1 à 5,
**caractérisé en ce**
**qu'**avant d'être fournie, de préférence lorsque elle passe par l'unité de fourniture (6, 26), la bande (2, 22) subit une réduction de tension, notamment une réduction de tension de traction.

7. Procédé selon la revendication 6,
**caractérisé en ce**
**qu'**avant d'être fournie, la bande (2, 22) subit un changement de direction d'au moins 90°, de préférence entre 90° et 270°, de préférence en étant déviée par une roue (4, 8, 8.1) ou une poulie.

8. Procédé selon l'une quelconque des revendications 1 à 7,
**caractérisé en ce**
**qu'**avant d'être fournie, la bande (2, 22) passe par un point presseur (12), qui est, de préférence, formé par des surfaces (9, 9.1, 9.2) de deux roues (4, 8, 8.1) rotatives précontraintes l'une contre l'autre.

9. Dispositif de fabrication de corps tubulaires souples pour des tubes d'emballage à partir d'un substrat de film (15), qui à, de préférence, une impression sur la face extérieure, le substrat de film (15) ayant ou se composant d'au moins une couche plastique scellable et comprenant un premier côté de bord longitudinal, qui s'étend dans une direction longitudinale (L), et un deuxième côté de bord longitudinal, qui est parallèle au et espacé du premier côté de bord longitudinal, le substrat de film (15) étant façonné en forme de corps tubulaire par des moyens de façonnage, et les deux côtés de bord longitudinal étant reliés, notamment scellés l'un à l'autre, tout en formant un joint de scellage longitudinal, une bande (2, 22) étant disposée sur l'intérieur et/ou sur l'extérieur du substrat de film (15) façonné en forme de corps tubulaire dans la région du joint de scellage longitudinal et étant liée, notamment scellée, aux côtés de bord longitudinal au moins en partie ou par sections, la bande (2, 22) étant chauffée, de préférence à une température supérieure à la température de plastification de la bande (2, 22), par des moyens de chauffage (19, 29, 39) avant qu'elle soit liée aux côtés de bord longitudinal,
**caractérisé par**
une unité de fourniture (6, 26) comprenant une unité d'entraînement (7, 27) configurée pour régler une vitesse de fourniture (vₛ) de la bande (2, 22) de telle manière que la vitesse de fourniture (vₛ) de la bande (2, 22) est inférieure à un vitesse d'avance ou de scellage (v₀) des côtés de bord longitudinal du substrat de film (15) dans la direction longitudinale (L).

10. Dispositif selon la revendication 9,
**caractérisé en ce que**
l'unité d'entraînement (7, 27) est en liaison fonctionnelle avec des moyens de fourniture (13) pour les côtés de bord longitudinal du substrat de film (15), de préférence une courroie (3, 23) tournant sans fin, et l'unité d'entraînement (7, 27) sont entraînées par le mouvement des moyens de fourniture (13), l'unité d'entraînement (7, 27) ayant, de préférence, un mécanisme de transmission (10) effectuant une décélération de la bande (2, 22).

11. Dispositif selon la revendication 9 ou 10,
**caractérisé en ce que**
des moyen de guidage (16) sont disposés en aval de l'unité de fourniture (6) dans la direction longitudinale (L), les moyens de guidage (16) guidant une bande (2), qui a, de préférence, été transférée ou fournie sur de moyens de fourniture (13).

12. Dispositif selon l'une quelconque des revendications 9 à 11,
**caractérisé en ce que**
l'unité de fourniture (6, 26) comprend un dispositif de déviation (11) effectuant une réduction de tension, notamment une réduction de tension de traction, de la bande (2, 22), de préférence au moyen d'un changement de direction de la bande (2, 22) d'au moins 90°, lorsque la bande (2, 22) passe par le dispositif de déviation (11).

13. Dispositif selon l'une quelconque des revendications 9 à 12,
**caractérisé en ce que**
l'unité de fourniture (6, 26) comprend un point presseur (12), qui est, de préférence, formé par des surfaces (9, 9.1, 9.2) de deux roues (4, 8, 8.1) rotatives précontraintes l'une contre l'autre.

14. Dispositif selon l'une quelconque des revendications 9 à 13,
**caractérisé en ce que**
le dispositif de déviation (11) et le point presseur (12) et/ou le mécanisme d'entraînement sont formés par les surfaces (9, 9.1, 9.2) d'au moins deux roues (4, 8, 8.1) rotatives précontraintes l'une contre l'autre.

15. Dispositif selon l'une quelconque des revendications 9 à 14,
**caractérisé en ce que**
l'unité de fourniture (6) et/ou le moyen de guidage (16) sont montés perpendiculairement à la direction longitudinale (L) par des moyens de ressort (21) élastiquement déformables, de préférence afin d'assurer un contact constant avec ou une pression de contact constante contre les moyens de fourniture (13).
